# EUROPEAN PATENT APPLICATION

(11) **EP 4 703 683 A1**
(43) Date of publication of application: **04.03.2026**
(21) Application number: 24197290.0
(22) Date of filing: 29.08.2024
(51) Int. Cl.: G01C 21/20, B63B 43/18, G01C 21/00, G01S 17/00, G05D 1/622, G08G 3/02, G01S 3/80

(54) **MAPPING SURROUNDINGS OF A MARINE VESSEL**

(71) Applicant: CPAC Systems AB, 401 23 Göteborg (SE)
(72) Inventor: BERGENWALL, Jonatan, 433 51 ÖJERSJÖ (SE)
(74) Representative: Ström & Gulliksson AB

(57) **Abstract**

Approaches are disclosed for mapping surroundings of a marine vessel (1). These involve obtaining, at a first location (30), first distance data from distance sensors (10) comprising a bow-mounted sensor (10-1) arranged to monitor a first area (12) involving surroundings adjacent to the bow (2) and a first side (3, 5) of the marine vessel (1), and a stern-mounted sensor (10-2) arranged to monitor a second area (13) involving surroundings adjacent to the stem (4) and a second side (5, 3), opposite the first side (3, 5), of the marine vessel (1). The approaches further involve generating a surroundings map (20) comprising at least two unmapped areas (22-1, 22-2) indicating blind spots of at least partially incomplete surroundings representations; obtaining, at a second location (40), second distance data from the set of distance sensors (10); and causing updates to the unmapped areas (22-1, 22-2) based on the second distance data.

## Description

### TECHNICAL FIELD

The disclosure relates generally to marine vessel control systems. In particular aspects, the disclosure relates to mapping surroundings of a marine vessel. The disclosure can be applied to marine vessels, such as leisure boats, ships, cruise ships, fishing vessels, yachts, ferries, among other vehicle types. Although the disclosure may be described with respect to a particular marine vessel, the disclosure is not restricted to any particular marine vessel.

### BACKGROUND

Navigating marine vessels safely and efficiently requires accurate knowledge of their surroundings. This is particularly important in congested waterways, during docking maneuvers, in adverse weather conditions, etc. The ability to map the surroundings of a marine vessel can enhance situational awareness, prevent collisions, and aid in navigation. Traditional approaches for mapping the surroundings of marine vessels, which rely on multiple sensor systems like radar, sonar, and LIDAR, often face several drawbacks, including high costs, complex integration and control algorithms, persistent blind spots, and challenges in real-time map updates.

It is in view of the above realizations and others the present inventor is herein suggesting one or more improvements to the prior art of mapping surroundings of a marine vessel.

### SUMMARY

As mentioned above, the prior art of mapping the surroundings of a marine vessel comes with many drawbacks.

First, the use of multiple expensive sensor systems can be cost-prohibitive, especially for smaller vessels or those operating on limited budgets. High-quality LIDAR sensors, for example, can be particularly costly, and their deployment in large numbers adds significant expense to the overall system.

Second, the integration of various sensor systems necessitates complex and advanced control algorithms to process and fuse data from different sources. This complexity can lead to increased computational requirements, higher power consumption, and the need for sophisticated software, making the system more cumbersome and difficult to maintain.

Third, despite the use of multiple sensors, blind spots or unmapped areas may still persist due to the physical structure of the vessel, sensor placement limitations, and environmental factors such as water spray and reflections. These blind spots pose a risk to safe navigation as they represent areas where obstacles or other vessels may go undetected.

Fourth, existing systems often struggle with real-time updates to the surroundings map as the vessel moves. As a vessel navigates through different locations, it is important to continuously update the surroundings map to reflect new data and changes in the environment. Many prior art solutions lack the ability to dynamically and accurately update the map, leading to outdated or incomplete representations of the surroundings.

Given these challenges, there is a clear need for improved solutions that can provide accurate, real-time mapping of the surroundings of marine vessels without the high costs and complexities associated with traditional sensor systems. Improvements are needed to reduce the number of sensors required, simplify data processing, and ensure comprehensive and continuous updates to the surroundings map to enhance navigational safety and efficiency.

According to a first aspect of the disclosure, there is accordingly provided a computer system for mapping surroundings of a marine vessel. The computer system comprises processing circuitry configured to: obtain, at a first location of the marine vessel, first distance data from a set of distance sensors, the set of distance sensors comprising a bow-mounted sensor arranged to monitor a first area at least involving surroundings adjacent to the bow and a first side of the marine vessel, and a stern-mounted sensor arranged to monitor a second area at least involving surroundings adjacent to the stern and a second side, opposite the first side, of the marine vessel, wherein the bow-mounted sensor and the stern-mounted sensor are diagonally arranged from each other on the marine vessel, wherein the bow-mounted sensor is arranged at a first edge portion between the first side and the bow, and wherein the stern-mounted sensor is arranged at a second edge portion between the second side and the stern; generate a surroundings map based on the first distance data, the surroundings map comprising at least two unmapped areas, each unmapped area indicating blind spots of at least partially incomplete surroundings representations; obtain, at a second location of the marine vessel, different from the first location, second distance data from the set of distance sensors; and cause one or more updates to the unmapped areas of the surroundings map based on the second distance data.

The first aspect of the disclosure may seek to solve the problem of accurately mapping the surroundings of marine vessels in a cost-effective and efficient manner, while reducing blind spots and simplifying the integration and control of sensor systems. A technical benefit may include reducing hardware costs and computational complexity by using a sophisticated sensor arrangement while enhancing the accuracy and completeness of the surroundings map.

Optionally in some examples, including in at least one preferred example, the processing circuitry is further configured to at the first location, store data points of the first distance data in the surroundings map as a 2D vector of a predetermined resolution, wherein the data points are stored as odds values representing the likelihood of space occupancy in said surroundings map; and at the second location, cause said one or more updates to the unmapped areas by: in areas of the surroundings map where odds values of data points of the second distance data indicate blind spots, maintaining the stored odds values in the surroundings map, and in areas of the surroundings map where odds values of data points of the second distance data do not indicate blind spots, updating the stored odds values of data points of the first distance data with said odds values of data points of the second distance data. A technical benefit may include the ability to dynamically maintain and update a probabilistic map of the surroundings, ensuring that previously detected probabilities are preserved and new data is integrated effectively, thereby enhancing the accuracy and completeness of the surroundings map.

Optionally in some examples, including in at least one preferred example, the processing circuitry is further configured to obtain positioning data from a positioning sensor, and cause said updates to the unmapped areas based on the positioning data. A technical benefit may include improved spatial accuracy in updating the surroundings map by incorporating precise positioning data.

Optionally in some examples, including in at least one preferred example, the processing circuitry is further configured to obtain IMU data from an IMU, and cause said updates to the unmapped areas based on the IMU data. A technical benefit may include increased reliability in updating the surroundings map by factoring in vessel orientation and movement data.

Optionally in some examples, including in at least one preferred example, the processing circuitry is further configured to obtain navigational data from a navigation system, and cause said updates to the unmapped areas based on the navigational data. A technical benefit may include enhanced predictive capabilities for updating the surroundings map based on planned navigation routes.

Optionally in some examples, including in at least one preferred example, the processing circuitry is further configured to present the surroundings map at a display device of the marine vessel. A technical benefit may include improved situational awareness for operators through real-time visual representation of the surroundings map.

Optionally in some examples, including in at least one preferred example, the processing circuitry is further configured to control a navigational operation of the marine vessel based on the surroundings map where said one or more updates have been caused, wherein the navigational operation is one or more of an assisted docking maneuver, a collision avoidance maneuver, and an autopilot maneuver. A technical benefit may include enhanced navigational safety and efficiency through automated control based on the most current surroundings map data.

Optionally in some examples, including in at least one preferred example, the processing circuitry is further configured to control an input device of the marine vessel based on the surroundings map where said one or more updates have been caused, said control of the input device being a force feedback control. A technical benefit may include improved manual control responsiveness and accuracy through real-time feedback based on updated surroundings data.

According to a second aspect of the disclosure, a marine vessel is provided. The marine vessel comprises the computer system of the first aspect; and a set of distance sensors comprising a bow-mounted sensor arranged to monitor a first area at least involving surroundings adjacent to the bow and a first side of the marine vessel, and a stern-mounted sensor arranged to monitor a second area at least involving surroundings adjacent to the stern and a second side, opposite the first side, of the marine vessel, wherein the bow-mounted sensor and the stern-mounted sensor are diagonally arranged from each other on the marine vessel, wherein the bow-mounted sensor is arranged at a first edge portion between the first side and the bow, and wherein the stern-mounted sensor is arranged at a second edge portion between the second side and the stern.

The second aspect of the disclosure may seek to solve the problem of accurately mapping the surroundings of marine vessels in a cost-effective and efficient manner, while reducing blind spots and simplifying the integration and control of sensor systems. A technical benefit may include reducing hardware costs and computational complexity by using a simplified sensor arrangement while enhancing the accuracy and completeness of the surroundings map.

Optionally in some examples, including in at least one preferred example, each of the bow-mounted sensor and the stern-mounted sensor has a horizontal field of view at an angle of at least 270°. A technical benefit may include expanded coverage and reduced blind spots through wide-angle sensors.

Optionally in some examples, including in at least one preferred example, the set of distance sensors includes only the bow-mounted sensor and the stern-mounted sensor. A technical benefit may include reduced hardware costs and system complexity by minimizing the number of sensors required.

Optionally in some examples, including in at least one preferred example, the first and second edge portions are disposed at a main body or a roof of the marine vessel. A technical benefit may include improved sensor placement for unobstructed views and enhanced data accuracy.

According to a third aspect of the disclosure, a computer-implemented method is provided. The method is for mapping surroundings of a marine vessel. The method comprises obtaining, by processing circuitry of a computer system, at a first location of the marine vessel, first distance data from a set of distance sensors, the set of distance sensors comprising a bow-mounted sensor arranged to monitor a first area at least involving surroundings adjacent to the bow and a first side of the marine vessel, and a stern-mounted sensor arranged to monitor a second area at least involving surroundings adjacent to the stern and a second side, opposite the first side, of the marine vessel, wherein the bow-mounted sensor and the stern-mounted sensor are diagonally arranged from each other on the marine vessel, wherein the bow-mounted sensor is arranged at a first edge portion between the first side and the bow, and wherein the stern-mounted sensor is arranged at a second edge portion between the second side and the stern; generating, by the processing circuitry, a surroundings map based on the first distance data, the surroundings map comprising at least two unmapped areas, each unmapped area indicating blind spots of at least partially incomplete surroundings representations; obtaining, by the processing circuitry, at a second location of the marine vessel, different from the first location, second distance data from the set of distance sensors; and causing, by the processing circuitry, one or more updates to the unmapped areas of the surroundings map based on the second distance data.

The third aspect of the disclosure may seek to solve the problem of accurately mapping the surroundings of marine vessels in a cost-effective and efficient manner, while reducing blind spots and simplifying the integration and control of sensor systems. A technical benefit may include reducing hardware costs and computational complexity by using a simplified sensor arrangement while enhancing the accuracy and completeness of the surroundings map.

According to a fourth aspect of the disclosure, a computer program product is provided. The computer program product comprises program code for performing, when executed by the processing circuitry, the method of the third aspect.

The fourth aspect of the disclosure may seek to enable new marine vessels and/or legacy marine vessels to be conveniently configured, by software installation/update, to accurately map the surroundings of marine vessels in a cost-effective and efficient manner, while reducing blind spots and simplifying the integration and control of sensor systems. A technical benefit may include reducing hardware costs and computational complexity by using a simplified sensor arrangement while enhancing the accuracy and completeness of the surroundings map.

According to a fifth aspect of the disclosure, a non-transitory computer-readable storage medium is provided. The non-transitory computer-readable storage medium comprises instructions, which when executed by the processing circuitry, cause the processing circuitry to perform the method of the third aspect.

The fifth aspect of the disclosure may seek to enable new marine vessels and/or legacy marine vessels to be conveniently configured, by software installation/update, to accurately map the surroundings of marine vessels in a cost-effective and efficient manner, while reducing blind spots and simplifying the integration and control of sensor systems. A technical benefit may include reducing hardware costs and computational complexity by using a simplified sensor arrangement while enhancing the accuracy and completeness of the surroundings map.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary system diagram of a marine vessel according to an example.
**FIG. 2A** is an exemplary illustration of a marine vessel in a first location where first sensor data is obtained according to an example.
**FIG. 2B** is an exemplary illustration of a surroundings map showing two unmapped areas associated with the first location according to the example of **FIG. 2A****.**
**FIG. 3A** is an exemplary illustration of a marine vessel in a second location, different from the first location of **FIG. 2A****,** where second distance data is obtained according to an example.
**FIG. 3B** is an exemplary illustration of where one or more updates have been caused to the surroundings map of **FIG. 2B** based on second distance data associated with the second location of **FIG. 3A****.**
**FIG. 4** is a flowchart of an exemplary computer-implemented method for mapping surroundings of a marine vessel according to an example.
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

This disclosure aims to aims to solve the problem of accurately mapping the surroundings of marine vessels in a cost-effective and efficient manner, while reducing blind spots and simplifying the integration and control of sensor systems. Approaches are proposed herein that utilize a simplified yet effective arrangement of distance sensors and data processing techniques to overcome the limitations of traditional systems. Strategically placed distance sensors involving a bow-mounted sensor and a stern-mounted sensor are provided. By minimizing the number of sensors required, the system can reduce costs associated with hardware. Moreover, the sensors are arranged diagonally from each other on the vessel, covering key areas such as the bow, the stern, and two opposite sides (often referred to as starboard and port). This placement can improve the monitoring range with minimal hardware. Processing circuitry is designed to handle data from these sensors, which can reduce the complexity of the algorithms needed for data fusion and lower the computational load. The processing circuitry identifies and updates unmapped areas, or blind spots, by updating data points from first distance readings obtained at a first location with and second distance readings obtained at a different, second location, where needed. This can ensure that previously unmonitored areas are accurately filled with new data, providing comprehensive coverage. As the vessel moves, the system may continuously refine its surroundings map based on new data, thus reducing blind spots and offering a more complete view of the environment. A continuous acquiring of distance data as the vessel moves to different locations is thereby enabled, providing a surroundings map which is current and reflective of the latest environmental conditions.

Using these approaches, cost savings can be envisaged by reducing the number of sensors and simplifying the hardware setup. The streamlined design and reduced need for complex control algorithms can make the system easy to install and maintain. By dynamically updating the surroundings map and filling in blind spots, the system can provide a more accurate and comprehensive representation of the vessel's environment, thereby enhancing situational awareness and reducing the risk of collisions. Ultimately, other control functions of the vessel can be carried out based on this surroundings map.

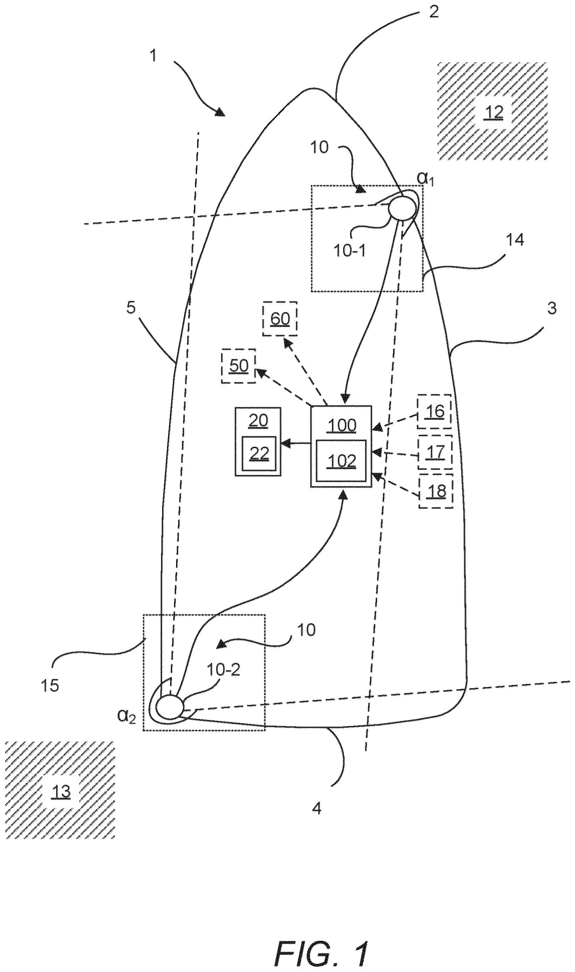

**FIG. 1** is an exemplary a marine vessel **1** where aspects and examples described herein can be applied. In non-limiting examples, the marine vessel **1** is a leisure boat, ship, cruise ship, fishing vessel, yacht, ferry, or the like. The marine vessel **1** is adapted to operate at bodies of water, e.g., a sea, ocean, lake, river, bay, gulf, strait, channel, reservoir, fjord, marsh, swamp, etc. The marine vessel **1** may be an electric marine vessel, gasoline-powered marine vessel, diesel-powered marine vessel, or the like.

The marine vessel **1** depicted in **FIG. 1** features a conventional structure comprising a bow **2,** which is the front part of the marine vessel **1** designed to cut through the water, and a stern **4,** which is the rear part of the marine vessel **1.** The marine vessel **1** also includes two sides: the first side **3,** commonly referred to as starboard, which is the right side when facing forward, and the second side **5,** known as port, which is the left side when facing forward.

While the vessel in **FIG. 1** presents a typical configuration with distinct bow, stem, port, and starboard sides, it is important to note that marine vessels can vary significantly in their designs. Different vessels may have unique relationships between the bow, stem, and sides, as well as varying lengths, heights, and overall shapes. For instance, some vessels might feature a more elongated bow for better hydrodynamics, while others might have a broader stern to accommodate additional equipment or cargo.

The sides **3, 5** of a marine vessel can also differ based on its specific purpose and design. For example, commercial fishing boats might have reinforced sides to withstand the harsh conditions of deep-sea fishing, while luxury yachts might have sleeker, more streamlined sides for aesthetic appeal and improved speed.

Additionally, marine vessels can range from small recreational boats to large commercial ships, each with its own set of structural features tailored to its intended use. Recreational boats might be designed with comfort and leisure in mind, featuring spacious decks and cabins, whereas commercial vessels might prioritize cargo capacity and durability, with robust hulls and reinforced structures.

Overall, while **FIG. 1** exemplifies one potential marine vessel design, the structural features of marine vessels are diverse, reflecting the wide range of functions they serve and the various environments in which they operate. The bow, stern, and sides are fundamental components that define the basic framework of any vessel, yet their specific designs can vary greatly to meet different operational requirements and aesthetic preferences.

The marine vessel **1** further comprises a set of distance sensors **10.** The set includes two primary components: a bow-mounted sensor **10-1** and a stern-mounted sensor **10-2.** In preferred embodiments the set of distance sensors **10** includes only these two sensors, as it is sufficient for generating surroundings map according to teachings herein. However, there is nonetheless a possibility to include additional distance sensors to this set. The bow-mounted sensor **10-1** and the stern-mounted sensor **10-2** are strategically positioned to monitor specific areas around the marine vessel **1** and provide comprehensive data for mapping its surroundings.

The sensors **10** may be based on sensing technologies known in the art, such as LIDAR, sonar, and radar. The employed sensing technology may vary depending on factors such as the specific requirements of the marine vessel **1** and environmental conditions.

The bow-mounted sensor **10-1** is installed at the front part of the marine vessel **1,** i.e., at the bow **2.** This sensor is specifically installed at the first edge portion **14,** which in this example is located at the junction between the bow **2** and the first side **3** of the marine vessel **1.** In other examples however, the first edge portion **14** could be the opposite edge at the bow **2,** i.e., the junction between the bow **2** and the second side **5** of the marine vessel **1.** The term "bow-mounted" means that the sensor **10-1** is attached to or integrated into the structure of the bow **2,** allowing it to monitor at least surroundings adjacent to the bow **2** and the first side **3** that are within line of sight. In the present disclosure these surroundings monitored by the bow-mounted sensor **10** are referred to as a first area **12.**

The exact placement of the bow-mounted sensor **10-1** can vary depending on the design and operational needs of the marine vessel **1.** It could be mounted at a main body, upper deck, hull, roof, or even on a mast extending from the bow **2.** The critical factor is that it should have an unobstructed view of the area it is intended to monitor. By being positioned at the first edge portion **14,** the sensor can effectively cover not only the front of the marine vessel **1** but also the adjacent side, enhancing its monitoring capabilities.

Oppositely, the stern-mounted sensor **10-2** is positioned at the rear part of the marine vessel **1,** known as the stern **4.** It is mounted at a second edge portion **15,** which in this example is located at the junction between the stern **4** and the second side **5** of the marine vessel **1.** The term "stern-mounted" means that the sensor **10-2** is attached to or integrated into the structure of the stern **4,** allowing it to monitor at least surroundings adjacent to the stern **4** and the second side **5** that are within line of sight.

The stern-mounted sensor **10-2** can also be installed in various locations on the stern **4,** such as on the transom, an aft deck, or a rear mast. The key consideration is that it should have a clear line of sight to the areas it needs to monitor. In the present disclosure these surroundings monitored by the bow-mounted sensor **10** are referred to as a second area **13.**

As mentioned above, the first area **12** and the second area **13** refer to the surroundings monitored by the bow-mounted sensor **10-1** and the stern-mounted sensor **10-2,** respectively. In the figure, these are merely arbitrarily visualized, but it shall be understood that one or more of these areas **12, 13** can vary in size, distance, and adaptability based on several factors, such as the type of sensing technology used, the specific requirements of the marine vessel **1,** and environmental conditions. The capabilities of the sensors **10,** such as those of LIDAR, sonar, and radar, influence the extent and precision of these areas **12, 13.** The range and field of view can be adjusted dynamically to suit different operational scenarios, such as open sea navigation or docking. Environmental factors like weather and water conditions also play a role, where the sensors **10** can potentially adapt their parameters to maintain accurate monitoring. The sensors **10** are placed at edge portions **14, 15** where the bow **2** and stern **4** meet the sides of the marine vessel **1.** This strategic positioning allows each sensor to monitor multiple critical areas simultaneously.

The edge portions **14, 15** are locations on the marine vessel **1** that are designed to provide improved coverage for the sensors **10.** The edge portions **14, 15** are strategically chosen because they are junctions between the main directional axes of the marine vessel **1,** i.e., front/back and left/right. Mounting the sensors **10** at these points can ensure that each sensor **10** can monitor multiple areas simultaneously, thus reducing blind spots. For instance, the bow-mounted sensor **10-1** at the first edge portion **14** as seen in **FIG. 1** can monitor both the area ahead of the bow **2** and the side **3** of the marine vessel **1,** providing a wide field of view. Similarly, the stern-mounted sensor **10-2** at the second edge portion **15** can cover the area behind the stern **4** and the opposite (second) side **5** of the marine vessel **1,** ensuring comprehensive monitoring.

The bow-mounted sensor **10-1** and the stern-mounted sensor **10-2** are arranged diagonally from each other. This means that the sensors **10** are positioned on the marine vessel **1** in such a way that they are located at opposite corners or edges when viewed from above. Hence, this diagonal arrangement refers to the placement of the sensors **10** along the longitudinal axis (running from the bow **2** to the stern **4**) of the marine vessel **1** and its transverse axis (running from port **5** to starboard **3**). The diagonal arrangement coupled with their placement at the edge portions **14, 15** enhances the monitoring capabilities of the system.

In some examples, each of the bow-mounted sensor **10-1** and the stern mounted sensor **10-2** has a horizontal field of view at an angle **α₁**, **α₂** of at least 270 °. It has been identified that this field of view can provide a satisfactory tradeoff between coverage and cost. This extensive field of view ensures that each sensor **10** can monitor a wide area around the marine vessel **1,** significantly reducing blind spots and enhancing situational awareness. By covering at least 270 °, each sensor **10** can effectively observe the respective areas **12, 13.** This broad coverage is achieved without the need for additional sensors, thereby keeping the system cost-effective.

The marine vessel **1** may in some examples further include a positioning sensor **16** configured to obtain positioning data. The positioning sensor **16** can determine the precise geographic location of the marine vessel **1** using technologies such as GPS, GLONASS, or other satellite-based navigation systems. The positioning sensor **16** can enhances the ability to navigate accurately by providing real-time location information, which can be integrated with other teachings described in this disclosure to improve situational awareness and ensure safe navigation through various maritime environments.

The marine vessel **1** may in some examples further include an Inertial Measurement Unit (IMU) **17** configured to obtain IMU data. The IMU typically include accelerometers, gyroscopes, and sometimes magnetometers, which together provide detailed information about orientation, acceleration, and angular velocity of the marine vessel **1.** Like the positioning sensor **16,** the IMU **17** may be used to improve situational awareness and ensure safe navigation through various maritime environments. The IMU data is used for stabilizing navigation and ensuring smooth operation, especially in rough sea conditions.

The marine vessel **1** may in some examples further include a navigation system **18** configured to obtain navigational data. The navigation system **18** can incorporate various sensors and instruments, such as compasses, speed logs, and echo sounders, to provide comprehensive navigational information. The navigation system can assist in plotting courses, detect underwater obstacles, and maintain the desired heading. Like the positioning sensor **16** and the IMU **17,** the navigational data can be combined with other teachings herein to cause safer and more efficient navigation that can avoid hazards and/or improve travel routes.

The marine vessel **1** may in some examples further include a controllable input device **50.** This device could be a joystick, a touchscreen interface, or any other user input mechanism that allows the operator to control movements and functionalities of the marine vessel **1.** The control of the controllable input device **50** may be a force feedback control, applying a tactile sensation or feedback to the operator of the surroundings. The controllable input device **50** can enable direct interaction with navigation and control systems of the marine vessel **1,** allowing for precise maneuvers, adjustments in speed, and other operational commands.

The marine vessel **1** may in some examples further include a display device **60.** The display device **60** may be configured to present graphical indications of the surroundings map (which will be described in more detail soon).

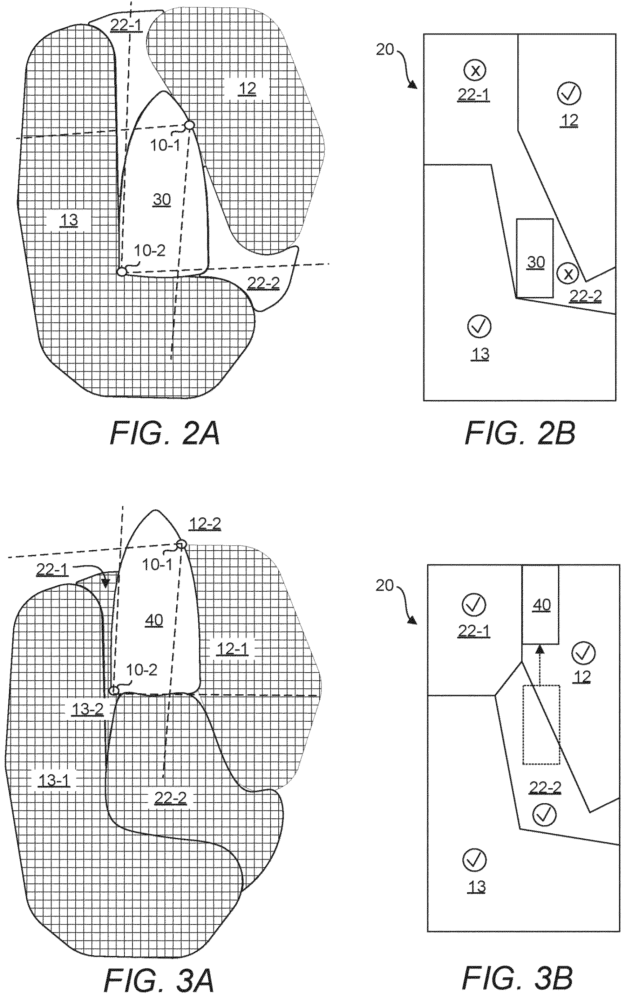

As mentioned above, the strategic positioning of the sensors **10** allows each to monitor multiple areas simultaneously, effectively covering a broad range around the marine vessel **1.** However, using only two sensors **10,** even with wide fields of view (such as 270 °), will inevitably result in blind spots due to the marine vessel **1** itself obstructing certain areas. Unlike a hypothetical completely transparent boat, which would likely not block any sensor views but is impractical due to structural integrity, material limitations, and safety concerns, real marine vessels create shadow zones (i.e., zones that are shadowed by the vessel). Therefore, the present disclosure also addresses the need to manage these shadow zones, referred to herein as "unmapped" areas **22,** together with the above-described sensor arrangement and configuration, to achieve a comprehensive 360-degree view of the surroundings of the marine vessel **1.** This is accomplished by generating a surroundings map **20** that includes at least two unmapped areas **22.** Further details on managing these unmapped areas **22** will now be described with reference to examples of **FIGs. 2A-B**and **3A-B.**

**FIG. 2A** shows a marine vessel **1** in a first location **30.** The first location **30** can be any point at sea or potentially at a berthing location when an operation is starting, such as a harbor, a docking area, or an offshore waypoint. In this figure (as well as in **FIG. 3A**), the patterned shapes represent areas that the sensors **10** can monitor, while the blank shapes indicate areas that the sensors **10** cannot view. Specifically, the viewable areas are the first area **12,** monitored by the bow-mounted sensor **10-1,** and the second area **13,** monitored by the stern-mounted sensor **10-2.** The extent and coverage of these areas **12, 13** vary based on several factors previously discussed, such as the type of sensor technology used, their field of view, and environmental conditions. The illustration shows how the strategic placement of the sensors **10** allows them to cover relatively large portions of the vessel's **1** surroundings but also highlights the presence of unmapped areas **22-1, 22-2** indicating blind spots that the sensors **10** cannot view. This setup underscores the importance of generating a surroundings map **20** to provide a comprehensive understanding of the vessel's **1** environment even in examples where wide field of view sensors are employed.

At the first location **30,** first distance data is obtained from the sensors **10-1, 10-2.** The first distance data provides the initial set of distance measurements, which are used to generate a preliminary surroundings map **20** that identifies both mapped and unmapped areas, the latter indicating regions where sensor coverage is incomplete, also known as blind spots or shadow zones. The blind spots correspond to at least partially incomplete surroundings representations. The term "at least partially incomplete surroundings representations" refers to sections of the surroundings map **20** that lack full sensor data coverage, resulting in gaps or blind spots in the map's **20** depiction of the marine vessel's **1** environment. These representations indicate areas where the data is insufficient to provide a comprehensive and accurate view, often due to physical obstructions, sensor limitations, or the current configuration and position of the sensors **10.** Consequently, these regions require further data collection to achieve a complete and detailed surroundings map **20.**

**FIG. 2B** shows an exemplary surroundings map **20** reflecting the operational scenario of **FIG. 2A****.** The surroundings map **20** is stored in a digital format, typically as a grid or mesh of spatial coordinates that represent the environment around the marine vessel **1.** Each cell or segment within this grid corresponds to a specific location relative to the marine vessel **1.** Each segment in the grid is associated with metadata indicating whether it has been populated with sensor data, in this case the first distance data.

The generation of the surroundings map **20** can involve either adding new data points to an already existing map or creating the map itself and subsequently projecting these data points onto it. In the first scenario, the processing circuitry **102** continuously updates the surroundings map **20** by incorporating new sensor data into the pre-existing framework, refining the details and filling in previously unmapped or semi-mapped areas. In the second scenario, the processing circuitry **102** generates a new map from scratch by collecting and integrating distance measurements from the sensors, creating a comprehensive representation of the vessel's **1** environment.

Typically, the surroundings map **20** is represented in two dimensions for reasons of computational efficiency. Although the sensors **10** obtain data in three dimensions, and sometimes even in four dimensions using advanced 4D imaging radars, this data is often translated into a 2D format. This translation simplifies the processing requirements and makes it easier for the processing circuitry **102** to handle and analyze the data. By reducing the complexity of the data, the system can more efficiently generate and update the surroundings map **20,** ensuring that the vessel's **1** navigational information is both accurate and timely.

The unmapped areas **22-1, 22-2** in this surroundings map **20,** also known as "shadow zones", are regions around the marine vessel **1** that the sensors **10** cannot monitor due to physical obstructions or limitations in their fields of view. Each unmapped area **22-1, 22-2** is defined by a set of spatial coordinates relative to the vessel's **1** position, providing a geometric representation of where the blind spots are located. The unmapped areas **22-1, 22-2** are gaps in the surroundings map **20** generated by the system, representing parts of the environment that lack direct distance data from the sensors. The unmapped areas **22-1, 22-2** are digitally represented by the processing circuitry **102** as segments of the surroundings map **20** that have not been populated with sensor data. These segments are typically marked or flagged within the data structure of the surroundings map **20** to indicate their incomplete status. Upon initialization of the surroundings map, all segments are initially flagged as unmapped. As sensor data is obtained and processed, the flags for segments that receive data are updated to reflect their populated status.

The marking or flagging of unmapped areas **22-1, 22-2** within the data structure of the surroundings map **20** can be accomplished through several technical means. This process involves the use of digital representations and data management techniques to identify and highlight regions that lack direct sensor data. Purely for illustrative purposes, **FIG. 2B** shows the marks with ("X") for the unmapped areas **22-1, 22-2** and ("CHECKMARK") for areas that have been mapped, in this case being the first and second areas **12, 13.** Alternative mapping identifiers can include markers such as a binary flag, a status code, or a color code, to denote their incomplete and/or complete status. A semi-mapped area can also be indicated, i.e., a region within the surroundings map **20** where partial sensor data is available but is not sufficient to provide a complete and accurate representation. These semi-mapped areas are typically flagged differently from fully unmapped or completely mapped areas to denote their intermediate status. The flagging can be implemented using various programming constructs, such as Boolean variables (true/false), enumeration types, or specific numerical values.

The size and shape of the unmapped areas **22-1, 22-2** can vary, influenced by the vessel's 1 physical properties, the placement, field of view and type of the sensors **10-1, 10-2,** and environmental conditions. For instance, a large superstructure or deckhouse on the vessel 1 might create extensive unmapped areas, whereas a more streamlined vessel design would result in smaller blind spots. These areas are dynamic and can change as the vessel moves and as new sensor data is obtained.

There will be at least two unmapped areas **22-1, 22-2.** The reason for this is based on the inherent limitations of the sensor placement and their fields of view. Given that the sensors **10-1, 10-2** are diagonally arranged, there will inherently be regions at the opposite corners or sides of the vessel that fall outside the coverage of any single sensor. Thus, it is guaranteed that there will be at least two areas that are not directly monitored by the sensors, necessitating subsequent sensor data to fill in these gaps as the vessel moves and new data is acquired.

**FIG. 3A** shows a marine vessel **1** in a second location **40.** The second location **40** is defined as a position where the marine vessel **1** is situated at a later point in time compared to the first location **30.** This second location **40** is distinct from the first **30** and represents a subsequent stage in the vessel's **1** movement or operational sequence. The simplest scenario of transitioning from the first location **30** to the second location **40** is during normal forward driving operation, as illustrated in the transition between **FIG. 2A** and **FIG. 3A****.** However, the second location **40** can also result from a variety of maneuvers, including any number of turns, backing operations, or other navigational adjustments the vessel **1** might undertake. At this second location **40,** the processing circuitry **102** obtains a new set of distance data, herein referred to as "second" distance data, from the sensors **10-1, 10-2.** This new data is then used to update the surroundings map **20,** specifically refining or filling in the previously identified unmapped areas **22-1, 22-2** or any semi-mapped regions.

As shown in the figure, since this is a continuous process and the vessel **1** moves, the sensors **10-1, 10-2** and accordingly the monitored first and second areas will also move. To this end, the first and second areas **12-1, 13-1** of the first location **30** naturally differs from the first and second areas **12-2, 13-2** of the second location **40.**

**FIG. 3B** reflects the operational scenario of **FIG. 3A****.** Herein, the surroundings map **20** initially shown in **FIG. 2B** is updated to reflect the vessel's **1** movement to the second location **40** and the acquisition of second sensor data. As the marine vessel **1** transitions from the first location **30** to the second location **40,** the sensors **10-1, 10-2** change their global positions, allowing them to cover different areas than those monitored at the first location. In this new second location **40,** the sensors can now capture data from areas that were previously unmapped or partially mapped, namely the areas **12-2** and **13-2** as shown in **FIG. 3A****.** As the sensors **10-1, 10-2** scan these new regions, the processing circuitry **102** integrates this second sensor data with the data obtained at the first location **30.** This combined data enables the system to update the surroundings map **20** by filling in the previously identified unmapped areas **22-1, 22-2** or semi-mapped regions.

This procedure may be carried out by storing data points of the first distance data in the surroundings map **20** as a 2D vector of a predetermined resolution, where the data points are stored as odds values representing the likelihood of space occupancy. At the second location **40,** the surroundings map **20** is updated by maintaining the stored odds values from the first location **30** in areas where the second distance data indicates blind spots and updating the stored odds values of data points of the first distance data with the odds values of data points of the second distance data in areas that do not indicate blind spots. This ensures that previously mapped areas do not need to be re-scanned unless necessary, providing a more accurate and comprehensive representation of the environment. In **FIG. 3B****,** this is visualized as the ("X")-flags from **FIG. 2B** now being represented by ("CHECKMARKS"). The segments that receive new data points are marked as complete by changing their flag status. This dynamic updating can ensure that the surroundings map **20** evolves to provide a continuously accurate and comprehensive representation of the surroundings map **20.**

As used herein, a "2D vector of predetermined resolution" refers to the grid-based representation of the surroundings map **20** as discussed above, where each cell in the grid corresponds to a specific area around the marine vessel **1** and holds data points at a fixed resolution. The term "odds" in this context refers to the probability or likelihood that a particular cell in the grid is occupied by an object or obstacle. This is accordingly a probabilistic data representation that accounts for uncertainties and variations in sensor measurements. The odds values represent the "likelihood of space occupancy", meaning the probability that a given area within the surroundings map **20** is occupied by an object (e.g. buoy, aquatic wildlife, other vessel, dock area, person swimming, and so forth). When the vessel **1** moves from the first location **30** to the second location **40,** the stored odds values from the first distance data are maintained for areas that become blind spots at the second location. This ensures that previously obtained information is not lost, even if those areas cannot currently be measured by the sensors **10.** Conversely, areas that were blind spots at the first location **30** but are now observable at the second location **40** can be updated with new odds values derived from the second distance data. This dynamic updating process allows the system to refine its surroundings map **20** continuously, enhancing its accuracy and reducing the extent of "partially incomplete object representations", which are areas lacking sufficient sensor data to provide a full and accurate depiction of the environment.

By integrating new odds with old odds in this manner, the computer system **100** ensures that the surroundings map remains as comprehensive and up-to-date as possible, effectively reducing blind spots and enhancing navigational safety. This probabilistic approach to mapping allows the computer system **100** to account for uncertainties and variations in sensor data, providing a robust and reliable representation of the marine vessel's **1** surroundings.

The above-explained procedure can function as an algorithm that continuously scans the data structure (the surroundings map **20**) for flagged segments. When new sensor data is processed, the algorithm identifies corresponding segments and updates their status. Specific algorithms that can be employed include Bayesian updating, which adjusts the odds values based on new evidence from the sensors, and Kalman filtering, which provides estimates of the current state by predicting and correcting based on new measurements. Additionally, these algorithms can use interpolation techniques, such as bilinear interpolation, to estimate values in areas where direct sensor readings are unavailable, and extrapolation techniques, such as polynomial extrapolation, to predict values beyond the range of direct measurements. These methods can help fill in gaps, further refining the surroundings map and ensuring its accuracy and completeness.

The above-described procedure may then preferably continue for any third, fourth, etc., location where the marine vessel **1** travels in the future. By way of this procedure, the computer system **100** continuously updates the surroundings map, reducing the size of unmapped areas by introducing new sets of data points.

In some examples, the processing circuitry may be configured to present the surroundings map **20** at the display device **60.** The display device **60** can therefore serve as an interface for operators, providing a visual representation of the vessel's **1** environment to enhance situational awareness and navigational safety. For user interfaces or visualization purposes, flagged segments within the surroundings map **20** can be visually distinguished using different colors, patterns, and/or transparency levels. For instance, fully mapped areas might be displayed in solid colors, while unmapped or semi-mapped areas could be represented with different shades, transparency levels, or distinct patterns. This visual distinction allows operators to quickly identify areas that lack sufficient sensor data and require further attention or data collection. By presenting the surroundings map **20** on the display device **60** with these visual cues, operators can easily assess the vessel's current environmental coverage and make informed decisions regarding navigation and maneuvering. The dynamic and continuous updating of the surroundings map, as the vessel **1** moves and acquires new sensor data, can ensure that the display device **60** provides the most current and accurate representation of the surroundings. This capability may then be further utilized for avoiding obstacles, planning routes, and ensuring the overall safety and efficiency of the vessel's **1** operations.

In some examples, the processing circuitry **102** is further configured to obtain positioning data from the positioning sensor **16,** and cause updates to the unmapped areas **22-1, 22-2** of the surroundings map **20** based on this positioning data. These examples may be useful for ensuring that the surroundings map **20** is accurately aligned with real-world global coordinates of the marine vessel **1.** For instance, in a busy port where precise navigation is desired and many complex and tight maneuvers typically occur, the positioning data can assist the computer system **100** to accurately locate and update blind spots on the map, reducing the risk of collisions with other vessels or port structures. By using high-accuracy GPS or other positioning technologies, the computer system **100** can maintain a highly precise and reliable surroundings map **20.**

In some examples, the processing circuitry **102** is further configured to obtain IMU data from the IMU **17** and cause updates to the unmapped areas **22-1, 22-2** based on this IMU data. These examples may be useful in scenarios where the vessel **1** experiences dynamic movements, such as during rough seas or complex maneuvers. The IMU data provides real-time information on the vessel's **1** orientation, velocity, and acceleration, which allows the computer system **100** to adjust the surroundings map **20** dynamically. For example, when navigating through turbulent waters, the IMU data can help the computer system **100** to account for rapid changes in the vessel's **1** position and orientation, ensuring that the updates to the unmapped areas **22-1, 22-2** are timely and accurate.

In some examples, the processing circuitry **102** is further configured to obtain navigational data from the navigation system **18** and cause updates to the unmapped areas **22-1, 22-2** based on this navigational data. These examples may be useful for long-distance voyages where the vessel **1** follows a pre-determined route. The navigational data provides comprehensive information about the vessel's **1** planned course, speed, and heading, allowing the computer system **100** to anticipate and update the surroundings map **20** proactively. For instance, when approaching a narrow channel or a congested shipping lane, the navigational data can help the computer system **100** to prepare the surroundings map **20** by preemptively updating blind spots based on the expected route. This proactive approach can ensure that the vessel 1 has a continuously updated and accurate map.

In some examples, the processing circuitry **102** is further configured to incorporate error handling mechanisms to address any inconsistencies or anomalies in the data. If two or more adjacent segments on the surroundings map **20** have conflicting data, the computer system **100** can flag these segments for further review or reprocessing. These examples can be useful for maintaining the accuracy and reliability of the surroundings map **20** in environments where sensor data might be affected by interference, reflections, or other anomalies. For example, when navigating through an area with dense structures such as a busy harbor or a rocky coastline, sensor data may occasionally produce conflicting readings due to reflections off surfaces or transient environmental conditions. In such cases, the error handling mechanisms can identify these anomalies by detecting discrepancies between adjacent segments. The flagged segments are then marked for further analysis, prompting the computer system **100** to either reprocess the data using advanced algorithms or prioritize these areas for additional sensor readings.

In some examples, the processing circuitry **102** is further configured to control a navigational operation of the marine vessel **1** based on the surroundings map **20** where said one or more updates have been caused. The navigational operation may be one or more of an assisted docking maneuver, collision avoidance maneuver, and autopilot maneuver. These examples may be useful for automating and improving the vessel's **1** navigation by utilizing the most current environmental data. For instance, when navigating through a narrow channel or approaching a docking area, the updated surroundings map **20** can provide real-time information about obstacles and blind spots. The processing circuitry **102** can then use this data to adjust the vessel's **1** course, speed, and heading automatically, which may ensure safe and efficient navigation. By relying on the continuously updated surroundings map **20,** the more precise navigational decisions can be taken.

In some examples, the processing circuitry **102** is further configured to control an input device **50** of the marine vessel **1** based on the surroundings map **20** where said one or more updates have been caused. The control may be a force feedback control. These examples may be useful for enhancing the vessel's **1** interactive control mechanisms by providing operators with real-time feedback and control options based on the latest environmental data. For example, the input device **50** could be a joystick, steering wheel, or touchscreen interface used to control the vessel's **1** movements. By integrating the surroundings map **20,** which includes the most recent updates, the computer system **100** can provide operators with precise control cues and adjustments. This can allow for more responsive and informed maneuvering, particularly in complex or dynamic environments. The continuous updates to the surroundings map **20** may ensure that the control of the input device **50** reflects the current state of the vessel's **1** surroundings.

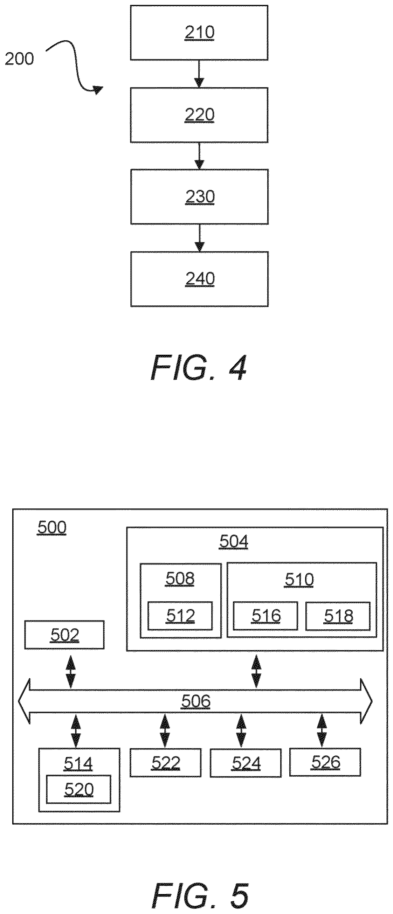

**FIG. 4** is a flowchart of a computer-implemented method **200** for mapping surroundings of a marine vessel. The method **200** comprises obtaining **210,** by processing circuitry of a computer system, at a first location of the marine vessel, first distance data from a set of distance sensors, the set of distance sensors comprising a bow-mounted sensor arranged to monitor a first area at least involving surroundings adjacent to the bow and a first side of the marine vessel, and a stern-mounted sensor arranged to monitor a second area at least involving surroundings adjacent to the stern and a second side, opposite the first side, of the marine vessel, wherein the bow-mounted sensor and the stern-mounted sensor are diagonally arranged from each other on the marine vessel, wherein the bow-mounted sensor is arranged at a first edge portion between the first side and the bow, and wherein the stern-mounted sensor is arranged at a second edge portion between the second side and the stem. The method further comprises generating **220,** by the processing circuitry, a surroundings map based on the first distance data, the surroundings map comprising at least two unmapped areas, each unmapped area indicating blind spots of at least partially incomplete surroundings representations; obtaining **230,** by the processing circuitry, at a second location of the marine vessel, different from the first location, second distance data from the set of distance sensors; and causing **240,** by the processing circuitry, one or more updates to the unmapped areas of the surroundings map based on the second distance data.

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device
interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In further examples of the disclosure the following is provided:
Example 1: A computer system (100) for mapping surroundings of a marine vessel (1), the computer system (100) comprising processing circuitry (102) configured to: obtain, at a first location (30) of the marine vessel (1), first distance data from a set of distance sensors (10), the set of distance sensors (10) comprising a bow-mounted sensor (10-1) arranged to monitor a first area (12) at least involving surroundings adjacent to the bow (2) and a first side (3, 5) of the marine vessel (1), and a stern-mounted sensor (10-2) arranged to monitor a second area (13) at least involving surroundings adjacent to the stern (4) and a second side (5, 3), opposite the first side (3, 5), of the marine vessel (1), wherein the bow-mounted sensor (10-1) and the stern-mounted sensor (10-2) are diagonally arranged from each other on the marine vessel (1), wherein the bow-mounted sensor (10-1) is arranged at a first edge portion (14) between the first side (3, 5) and the bow (2), and wherein the stern-mounted sensor (10-2) is arranged at a second edge portion (15) between the second side (5, 3) and the stern (4); generate a surroundings map (20) based on the first distance data, the surroundings map (20) comprising at least two unmapped areas (22-1, 22-2), each unmapped area (22-1, 22-2) indicating blind spots of at least partially incomplete surroundings representations; obtain, at a second location (40) of the marine vessel (1), different from the first location (30), second distance data from the set of distance sensors (10); and cause one or more updates to the unmapped areas (22-1, 22-2) of the surroundings map (20) based on the second distance data.
Example 2: The computer system (100) of Example 1, wherein the processing circuitry (102) is further configured to: at the first location (30), store data points of the first distance data in the surroundings map (20) as a 2D vector of a predetermined resolution, wherein the data points are stored as odds values representing the likelihood of space occupancy in said surroundings map (20); and at the second location (40), cause said one or more updates to the unmapped areas (22-1, 22-2) by: in areas of the surroundings map (20) where odds values of data points of the second distance data indicate blind spots, maintaining the stored odds values in the surroundings map (20), and in areas of the surroundings map (20) where odds values of data points of the second distance data do not indicate blind spots, updating the stored odds values of data points of the first distance data with said odds values of data points of the second distance data.
Example 3: The computer system (100) of any of Examples 1-2, wherein the processing circuitry (102) is further configured to: obtain positioning data from a positioning sensor (16), and cause said updates to the unmapped areas (22-1, 22-2) based on the positioning data.
Example 4: The computer system (100) of any of Examples 1-3, wherein the processing circuitry (102) is further configured to: obtain IMU data from an IMU (17), and cause said updates to the unmapped areas (22-1, 22-2) based on the IMU data.
Example 5: The computer system (100) of any of Examples 1-4, wherein the processing circuitry (102) is further configured to: obtain navigational data from a navigation system (18), and cause said updates to the unmapped areas (22-1, 22-2) based on the navigational data.
Example 6: The computer system (100) of any of Examples 1-5, wherein the processing circuitry (102) is further configured to present the surroundings map (20) at a display device (60) of the marine vessel (1).
Example 7: The computer system (100) of any of Examples 1-6, wherein the processing circuitry (102) is further configured to control a navigational operation of the marine vessel (1) based on the surroundings map (20) where said one or more updates have been caused.
Example 8: The computer system (100) of Example 7, wherein the navigational operation is an assisted docking maneuver.
Example 9: The computer system (100) of any of Examples 7-8, wherein the navigational operation is a collision avoidance maneuver.
Example 10: The computer system (100) of any of Examples 7-9, wherein the navigational operation is an autopilot maneuver.
Example 11: The computer system (100) of any of Examples 1-10, wherein the processing circuitry (102) is further configured to control an input device (50) of the marine vessel (1) based on the surroundings map (20) where said one or more updates have been caused.
Example 12: The computer system (100) of Example 11, wherein the control of the input device (50) is a force feedback control.
Example 13: The computer system (100) of any of Examples 1-12, wherein the unmapped areas (22-1, 22-2) depend on physical properties of the marine vessel (1) and the location of the first and second edge portions (14, 15).
Example 14: A marine vessel (1), comprising: the computer system (100) of any of Examples 1-13; and a set of distance sensors (10) comprising a bow-mounted sensor (10-1) arranged to monitor a first area (12) at least involving surroundings adjacent to the bow (2) and a first side (3, 5) of the marine vessel (1), and a stern-mounted sensor (10-2) arranged to monitor a second area (13) at least involving surroundings adjacent to the stern (4) and a second side (5, 3), opposite the first side (3, 5), of the marine vessel (1), wherein the bow-mounted sensor (10-1) and the stern-mounted sensor (10-2) are diagonally arranged from each other on the marine vessel (1), wherein the bow-mounted sensor (10-1) is arranged at a first edge portion (14) between the first side (3, 5) and the bow (2), and wherein the stern-mounted sensor (10-2) is arranged at a second edge portion (15) between the second side (5, 3) and the stern (4).
Example 15: The marine vessel (1) of Example 14, wherein each of the bow-mounted sensor (10-1) and the stern-mounted sensor (10-2) has a horizontal field of view at an angle (α1, α2) of at least 270 °.
Example 16: The marine vessel (1) of any of Examples 14-15, further comprising a positioning sensor (16) configured to obtain positioning data.
Example 17: The marine vessel (1) of any of Examples 14-16, further comprising an IMU (17) configured to obtain IMU data.
Example 18: The marine vessel (1) of any of Examples 14-17, further comprising a navigation system (18) configured to obtain navigational data.
Example 19: The marine vessel (1) of any of Examples 14-18, further comprising a controllable input device (50).
Example 20: The marine vessel (1) of any of Examples 14-19, wherein the set of distance sensors (10) includes only the bow-mounted sensor (10-1) and the stern-mounted sensor (10-2).
Example 21: The marine vessel (1) of any of Examples 14-20, wherein the first and second edge portions (14, 15) are disposed at a main body or a roof of the marine vessel (1).
Example 22: The marine vessel (1) of any of Examples 14-21, further comprising a display device (60) configured to present the surroundings map (20).
Example 23: A computer-implemented method (200) for mapping surroundings of a marine vessel (1), comprising: obtaining (210), by processing circuitry (102) of a computer system (100), at a first location (30) of the marine vessel (1), first distance data from a set of distance sensors (10), the set of distance sensors (10) comprising a bow-mounted sensor (10-1) arranged to monitor a first area (12) at least involving surroundings adjacent to the bow (2) and a first side (3, 5) of the marine vessel (1), and a stern-mounted sensor (10-2) arranged to monitor a second area (13) at least involving surroundings adjacent to the stern (4) and a second side (5, 3), opposite the first side (3, 5), of the marine vessel (1), wherein the bow-mounted sensor (10-1) and the stern-mounted sensor (10-2) are diagonally arranged from each other on the marine vessel (1), wherein the bow-mounted sensor (10-1) is arranged at a first edge portion (14) between the first side (3, 5) and the bow (2), and wherein the stern-mounted sensor (10-2) is arranged at a second edge portion (15) between the second side (5, 3) and the stern (4); generating (220), by the processing circuitry (102), a surroundings map (20) based on the first distance data, the surroundings map (20) comprising at least two unmapped areas (22-1, 22-2), each unmapped area (22-1, 22-2) indicating blind spots of at least partially incomplete surroundings representations; obtaining (230), by the processing circuitry (102), at a second location (40) of the marine vessel (1), different from the first location (30), second distance data from the set of distance sensors (10); and causing (240), by the processing circuitry (102), one or more updates to the unmapped areas (22-1, 22-2) of the surroundings map (20) based on the second distance data.
Example 24: A computer program product comprising program code for performing, when executed by the processing circuitry, the method (200) of Example 23.
Example 25: A non-transitory computer-readable storage medium comprising instructions, which when executed by the processing circuitry, cause the processing circuitry to perform the method (200) of Example 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) for mapping surroundings of a marine vessel (1), the computer system (100) comprising processing circuitry (102) configured to:
obtain, at a first location (30) of the marine vessel (1), first distance data from a set of distance sensors (10), the set of distance sensors (10) comprising a bow-mounted sensor (10-1) arranged to monitor a first area (12) at least involving surroundings adjacent to the bow (2) and a first side (3, 5) of the marine vessel (1), and a stern-mounted sensor (10-2) arranged to monitor a second area (13) at least involving surroundings adjacent to the stern (4) and a second side (5, 3), opposite the first side (3, 5), of the marine vessel (1),
- wherein the bow-mounted sensor (10-1) and the stern-mounted sensor (10-2) are diagonally arranged from each other on the marine vessel (1),
- wherein the bow-mounted sensor (10-1) is arranged at a first edge portion (14) between the first side (3, 5) and the bow (2), and
- wherein the stern-mounted sensor (10-2) is arranged at a second edge portion (15) between the second side (5, 3) and the stern (4);
generate a surroundings map (20) based on the first distance data, the surroundings map (20) comprising at least two unmapped areas (22-1, 22-2), each unmapped area (22-1, 22-2) indicating blind spots of at least partially incomplete surroundings representations;
obtain, at a second location (40) of the marine vessel (1), different from the first location (30), second distance data from the set of distance sensors (10); and
cause one or more updates to the unmapped areas (22-1, 22-2) of the surroundings map (20) based on the second distance data.

2. The computer system (100) of claim 1, wherein the processing circuitry (102) is further configured to:
at the first location (30), store data points of the first distance data in the surroundings map (20) as a 2D vector of a predetermined resolution, wherein the data points are stored as odds values representing the likelihood of space occupancy in said surroundings map (20); and
at the second location (40), cause said one or more updates to the unmapped areas (22-1, 22-2) by:
- in areas of the surroundings map (20) where odds values of data points of the second distance data indicate blind spots, maintaining the stored odds values in the surroundings map (20), and
- in areas of the surroundings map (20) where odds values of data points of the second distance data do not indicate blind spots, updating the stored odds values of data points of the first distance data with said odds values of data points of the second distance data.

3. The computer system (100) of any of claims 1-2, wherein the processing circuitry (102) is further configured to:
obtain positioning data from a positioning sensor (16), and
cause said updates to the unmapped areas (22-1, 22-2) based on the positioning data.

4. The computer system (100) of any of claims 1-3, wherein the processing circuitry (102) is further configured to:
obtain IMU data from an IMU (17), and
cause said updates to the unmapped areas (22-1, 22-2) based on the IMU data.

5. The computer system (100) of any of claims 1-4, wherein the processing circuitry (102) is further configured to:
obtain navigational data from a navigation system (18), and
cause said updates to the unmapped areas (22-1, 22-2) based on the navigational data.

6. The computer system (100) of any of claims 1-5, wherein the processing circuitry (102) is further configured to present the surroundings map (20) at a display device (60) of the marine vessel (1).

7. The computer system (100) of any of claims 1-6, wherein the processing circuitry (102) is further configured to control a navigational operation of the marine vessel (1) based on the surroundings map (20) where said one or more updates have been caused, wherein the navigational operation is one or more of an assisted docking maneuver, a collision avoidance maneuver, and an autopilot maneuver.

8. The computer system (100) of any of claims 1-7, wherein the processing circuitry (102) is further configured to control an input device (50) of the marine vessel (1) based on the surroundings map (20) where said one or more updates have been caused, said control of the input device (50) being a force feedback control.

9. A marine vessel (1), comprising:
the computer system (100) of any of claims 1-8; and
a set of distance sensors (10) comprising a bow-mounted sensor (10-1) arranged to monitor a first area (12) at least involving surroundings adjacent to the bow (2) and a first side (3, 5) of the marine vessel (1), and a stern-mounted sensor (10-2) arranged to monitor a second area (13) at least involving surroundings adjacent to the stern (4) and a second side (5, 3), opposite the first side (3, 5), of the marine vessel (1),
- wherein the bow-mounted sensor (10-1) and the stern-mounted sensor (10-2) are diagonally arranged from each other on the marine vessel (1),
- wherein the bow-mounted sensor (10-1) is arranged at a first edge portion (14) between the first side (3, 5) and the bow (2), and
- wherein the stern-mounted sensor (10-2) is arranged at a second edge portion (15) between the second side (5, 3) and the stern (4).

10. The marine vessel (1) of claim 9, wherein each of the bow-mounted sensor (10-1) and the stern-mounted sensor (10-2) has a horizontal field of view at an angle (α₁, α₂) of at least 270 °.

11. The marine vessel (1) of any of claims 9-10, wherein the set of distance sensors (10) includes only the bow-mounted sensor (10-1) and the stern-mounted sensor (10-2).

12. The marine vessel (1) of any of claims 9-11, wherein the first and second edge portions (14, 15) are disposed at a main body or a roof of the marine vessel (1).

13. A computer-implemented method (200) for mapping surroundings of a marine vessel (1), comprising:
obtaining (210), by processing circuitry (102) of a computer system (100), at a first location (30) of the marine vessel (1), first distance data from a set of distance sensors (10), the set of distance sensors (10) comprising a bow-mounted sensor (10-1) arranged to monitor a first area (12) at least involving surroundings adjacent to the bow (2) and a first side (3, 5) of the marine vessel (1), and a stern-mounted sensor (10-2) arranged to monitor a second area (13) at least involving surroundings adjacent to the stern (4) and a second side (5, 3), opposite the first side (3, 5), of the marine vessel (1),
- wherein the bow-mounted sensor (10-1) and the stern-mounted sensor (10-2) are diagonally arranged from each other on the marine vessel (1),
- wherein the bow-mounted sensor (10-1) is arranged at a first edge portion (14) between the first side (3, 5) and the bow (2), and
- wherein the stern-mounted sensor (10-2) is arranged at a second edge portion (15) between the second side (5, 3) and the stern (4).
generating (220), by the processing circuitry (102), a surroundings map (20) based on the first distance data, the surroundings map (20) comprising at least two unmapped areas (22-1, 22-2), each unmapped area (22-1, 22-2) indicating blind spots of at least partially incomplete surroundings representations;
obtaining (230), by the processing circuitry (102), at a second location (40) of the marine vessel (1), different from the first location (30), second distance data from the set of distance sensors (10); and
causing (240), by the processing circuitry (102), one or more updates to the unmapped areas (22-1, 22-2) of the surroundings map (20) based on the second distance data.

14. A computer program product comprising program code for performing, when executed by the processing circuitry, the method (200) of claim 13.

15. A non-transitory computer-readable storage medium comprising instructions, which when executed by the processing circuitry, cause the processing circuitry to perform the method (200) of claim 13.

## Amended claims

### Amended claims in accordance with Rule 137(2) EPC.

1. A computer system (100) for mapping surroundings of a marine vessel (1), the computer system (100) comprising processing circuitry (102) configured to:
obtain, at a first location (30) of the marine vessel (1), first distance data from a set of distance sensors (10), the set of distance sensors (10) comprising a bow-mounted sensor (10-1) arranged to monitor a first area (12) at least involving surroundings adjacent to the bow (2) and a first side (3, 5) of the marine vessel (1), and a stem-mounted sensor (10-2) arranged to monitor a second area (13) at least involving surroundings adjacent to the stern (4) and a second side (5, 3), opposite the first side (3, 5), of the marine vessel (1),
- wherein the bow-mounted sensor (10-1) and the stem-mounted sensor (10-2) are diagonally arranged from each other on the marine vessel (1),
- wherein the bow-mounted sensor (10-1) is arranged at a first edge portion (14) between the first side (3, 5) and the bow (2),
- wherein the stem-mounted sensor (10-2) is arranged at a second edge portion (15) between the second side (5, 3) and the stern (4), and
- wherein the set of distance sensors (10) includes only the bow-mounted sensor (10-1) and the stem-mounted sensor (10-2);
generate a surroundings map (20) based on the first distance data, the surroundings map (20) comprising at least two unmapped areas (22-1, 22-2), each unmapped area (22-1, 22-2) indicating blind spots of at least partially incomplete surroundings representations;
obtain, at a second location (40) of the marine vessel (1), different from the first location (30), second distance data from the set of distance sensors (10); and
cause one or more updates to the unmapped areas (22-1, 22-2) of the surroundings map (20) based on the second distance data.

2. The computer system (100) of claim 1, wherein the processing circuitry (102) is further configured to:
at the first location (30), store data points of the first distance data in the surroundings map (20) as a 2D vector of a predetermined resolution, wherein the data points are stored as odds values representing the likelihood of space occupancy in said surroundings map (20); and
at the second location (40), cause said one or more updates to the unmapped areas (22-1, 22-2) by:
- in areas of the surroundings map (20) where odds values of data points of the second distance data indicate blind spots, maintaining the stored odds values in the surroundings map (20), and
- in areas of the surroundings map (20) where odds values of data points of the second distance data do not indicate blind spots, updating the stored odds values of data points of the first distance data with said odds values of data points of the second distance data.

3. The computer system (100) of any of claims 1-2, wherein the processing circuitry (102) is further configured to:
obtain positioning data from a positioning sensor (16), and
cause said updates to the unmapped areas (22-1, 22-2) based on the positioning data.

4. The computer system (100) of any of claims 1-3, wherein the processing circuitry (102) is further configured to:
obtain IMU data from an IMU (17), and
cause said updates to the unmapped areas (22-1, 22-2) based on the IMU data.

5. The computer system (100) of any of claims 1-4, wherein the processing circuitry (102) is further configured to:
obtain navigational data from a navigation system (18), and
cause said updates to the unmapped areas (22-1, 22-2) based on the navigational data.

6. The computer system (100) of any of claims 1-5, wherein the processing circuitry (102) is further configured to present the surroundings map (20) at a display device (60) of the marine vessel (1).

7. The computer system (100) of any of claims 1-6, wherein the processing circuitry (102) is further configured to control a navigational operation of the marine vessel (1) based on the surroundings map (20) where said one or more updates have been caused, wherein the navigational operation is one or more of an assisted docking maneuver, a collision avoidance maneuver, and an autopilot maneuver.

8. The computer system (100) of any of claims 1-7, wherein the processing circuitry (102) is further configured to control an input device (50) of the marine vessel (1) based on the surroundings map (20) where said one or more updates have been caused, said control of the input device (50) being a force feedback control.

9. A marine vessel (1), comprising:
the computer system (100) of any of claims 1-8; and
a set of distance sensors (10) comprising a bow-mounted sensor (10-1) arranged to monitor a first area (12) at least involving surroundings adjacent to the bow (2) and a first side (3, 5) of the marine vessel (1), and a stem-mounted sensor (10-2) arranged to monitor a second area (13) at least involving surroundings adjacent to the stern (4) and a second side (5, 3), opposite the first side (3, 5), of the marine vessel (1),
- wherein the bow-mounted sensor (10-1) and the stem-mounted sensor (10-2) are diagonally arranged from each other on the marine vessel (1),
- wherein the bow-mounted sensor (10-1) is arranged at a first edge portion (14) between the first side (3, 5) and the bow (2),
- wherein the stem-mounted sensor (10-2) is arranged at a second edge portion (15) between the second side (5, 3) and the stern (4), and
- wherein the set of distance sensors (10) includes only the bow-mounted sensor (10-1) and the stern-mounted sensor (10-2).

10. The marine vessel (1) of claim 9, wherein each of the bow-mounted sensor (10-1) and the stem-mounted sensor (10-2) has a horizontal field of view at an angle (α₁, α₂) of at least 270 °.

11. The marine vessel (1) of any of claims 9-10, wherein the first and second edge portions (14, 15) are disposed at a main body or a roof of the marine vessel (1).

12. A computer-implemented method (200) for mapping surroundings of a marine vessel (1), comprising:
obtaining (210), by processing circuitry (102) of a computer system (100), at a first location (30) of the marine vessel (1), first distance data from a set of distance sensors (10), the set of distance sensors (10) comprising a bow-mounted sensor (10-1) arranged to monitor a first area (12) at least involving surroundings adjacent to the bow (2) and a first side (3, 5) of the marine vessel (1), and a stem-mounted sensor (10-2) arranged to monitor a second area (13) at least involving surroundings adjacent to the stern (4) and a second side (5, 3), opposite the first side (3, 5), of the marine vessel (1),
- wherein the bow-mounted sensor (10-1) and the stem-mounted sensor (10-2) are diagonally arranged from each other on the marine vessel (1),
- wherein the bow-mounted sensor (10-1) is arranged at a first edge portion (14) between the first side (3, 5) and the bow (2),
- wherein the stem-mounted sensor (10-2) is arranged at a second edge portion (15) between the second side (5, 3) and the stern (4), and
- wherein the set of distance sensors (10) includes only the bow-mounted sensor (10-1) and the stern-mounted sensor (10-2);
generating (220), by the processing circuitry (102), a surroundings map (20) based on the first distance data, the surroundings map (20) comprising at least two unmapped areas (22-1, 22-2), each unmapped area (22-1, 22-2) indicating blind spots of at least partially incomplete surroundings representations;
obtaining (230), by the processing circuitry (102), at a second location (40) of the marine vessel (1), different from the first location (30), second distance data from the set of distance sensors (10); and
causing (240), by the processing circuitry (102), one or more updates to the unmapped areas (22-1, 22-2) of the surroundings map (20) based on the second distance data.

13. A computer program product comprising program code for performing, when executed by the processing circuitry, the method (200) of claim 12.

14. A non-transitory computer-readable storage medium comprising instructions, which when executed by the processing circuitry, cause the processing circuitry to perform the method (200) of claim 12.
